# EUROPEAN PATENT SPECIFICATION

(11) **EP 2 595 162 B1**
(45) Date of publication and mention of the grant of the patent: **11.05.2022**
(21) Application number: 12191671.2
(22) Date of filing: 07.11.2012
(51) Int. Cl.: H01F 38/14, H01F 27/28

(54) **Wireless power transmitting apparatus**
Drahtlose Leistungsübertragungsvorrichtung
Appareil de transmission de puissance électrique sans fil

(30) Priority: 10.11.2011 KR 20110116929
(43) Date of publication of application: 22.05.2013
(73) Proprietor: GE Hybrid Technologies, LLC, Niskayuna, New York 12309 (US)
(72) Inventor: Jung, Chun-Kil, GANGNAM-GU, SEOUL (KR)
(74) Representative: Dennemeyer & Associates S.A.

(56) References cited:
- EP-A2- 2 428 969
- WO-A2-03/096512
- US-A1- 2004 267 501
- US-A1- 2009 096 414
- US-A1- 2009 230 777
- None

## Description

### FIELD

The present disclosure relates to a wireless power transmitting apparatus wirelessly transmitting a power using a power transmitting coil.

### DESCRIPTION OF THE RELATED ART

US 2004/267,501 A1 is directed to a maintenance unit wherein a sensor apparatus includes a battery and a substantially planar secondary coil that includes at least one coil turn, the secondary coil being connected with the battery for charging the battery, the power charger further comprising a substantially planar primary coil having at least two coil turns, at least one of the at least two coil turns being wound in a clockwise direction, at least one of the at least two coil turns being wound in a counter clockwise direction; whereby, placing the secondary coil in a substantially parallel non-coplanar position proximal to the primary coil causes an induction of electrical power in the secondary coil when electrical power is applied to the primary coil.

Generally, various portable terminals such as a cellular phone, a personal digital assistant (PDA), and the like, have been mounted with a power receiving apparatus such as a battery pack charged with a power to supply an operation power thereto. The power receiving apparatus may be charged with a power supplied from an external charging apparatus and supply the charged power to the portable terminal to operate the portable terminal.

The power receiving apparatus may include a battery cell module charged with the power, a charging and discharging circuit charging the power supplied from the external charging apparatus in the battery cell module and discharging the power charged in the battery cell module to supply the discharged power to the portable terminal, and the like.

As a scheme of electrically connecting the charging apparatus to the power receiving apparatus, a terminal connection scheme of directly connecting a terminal through which the power is output in the charging apparatus to a terminal to which the power is input in the power receiving apparatus through a cable has been known.

In the terminal connection scheme, the terminal of the charging apparatus and the terminal of the power receiving apparatus have the different potential difference. Therefore, in the case in which the terminal of the charging apparatus and the terminal of the power receiving apparatus are connected to each other or disconnected from each other, an instantaneous discharging phenomenon may occur.

The instantaneous discharge phenomenon causes abrasion of the terminal of the charging apparatus and the terminal of the power receiving apparatus. In addition, in the case in which foreign materials are accumulated in the terminal of the charging apparatus and the terminal of the power receiving apparatus, heat is generated from the foreign materials, such that there is a risk of an accident such as a fire, or the like.

In addition, the power charged in the battery cell module of the power receiving apparatus is naturally discharged to the outside through the terminal of the power receiving apparatus due to moisture, or the like, such that a lifespan of the power receiving apparatus may be decreased and performance of the power receiving apparatus may be deteriorated.

Recently, a wireless power transmitting apparatus wirelessly transmitting the power to the power receiving apparatus has been suggested in order to solve several problems of the terminal connection scheme as described above.

The wireless power transmitting apparatus wirelessly transmits the power in, for example, an electromagnetic induction scheme. In addition, the power receiving apparatus receives the power wirelessly transmitted by the wireless power transmitting apparatus and charges the received power in the battery cell module.

A number of efforts have been conducted in order for the wireless power transmitting apparatus to wirelessly transmit the power stably at high efficiency and in order for the power receiving apparatus to receive the power transmitted by the wireless power transmitting apparatus as much as possible to charge the power in the battery cell module.

The wireless power transmitting apparatus includes a core assembly. The core assembly of the wireless power transmitting apparatus includes a core and a power transmitting coil seated on the core and transmitting the power.

In addition, the power receiving apparatus also includes a core assembly, and the core assembly of the power receiving apparatus includes a core and a power receiving coil seated on the core and receiving the power transmitted by the wireless power transmitting apparatus.

The power transmitting coil included in the core assembly of the wireless power transmitting apparatus and the power receiving coil included in the core assembly of the power receiving apparatus have different sizes due to characteristics thereof.

That is, since the power receiving coil of the power receiving apparatus should be connected to the portable terminal and provide a charging function, there is a limitation that a size of the power receiving coil is determined according to a size of the power receiving apparatus.

To the contrary, the power transmitting coil of the wireless power transmitting apparatus should be able to be mounted with the entire portable terminal in which the power receiving apparatus is mounted. Therefore, there is a limitation that a size of the power transmitting coil of the wireless power transmitting apparatus should be larger than that of the portable terminal.

Due to these size limitations, unbalance appears in the sizes of the core, the power transmitting coil, and the power receiving coil of the core assemblies, which is main components, included in each of the wireless power transmitting apparatus and the power receiving apparatus.

Further, since the portable terminal generally has a rectangular shape, the power transmitting coil included in the core assembly of the wireless power transmitting apparatus generally an oval shape or a rectangular shape rather than a circular shape, and the core included in the core assembly of the wireless power transmitting apparatus also has a rectangular shape or an oval shape rather than a square shape.

However, since the power receiving apparatus mounted in the portable terminal generally has a square shape, the power receiving coil included in the core assembly of the power receiving apparatus generally has a circular shape, and the core on which the power receiving coil is mounted also generally has a rectangular shape or a circular shape.

The unbalance of the sizes of the core assemblies provided in each of the wireless power transmitting apparatus and the power receiving apparatus causes unbalance of the power received by the power receiving apparatus. That is, in the case in which the power receiving apparatus is put on the wireless power transmitting apparatus, a power induced to the power receiving coil of the core assembly of the power receiving apparatus by a magnetic flux generated by a current flowing to the power transmitting coil of the core assembly of the wireless power transmitting apparatus is changed according to a position at which the core assembly of the power receiving apparatus is put.

The unbalance of the power induced to the power receiving coil has a negative effect on communication of digital data transmitted between the wireless power transmitting apparatus and the power receiving apparatus.

### SUMMARY

The present invention is defined in the accompanying claims.

An object of the present disclosure is to provide a power transmitting coil and a wireless power transmitting apparatus capable of transmitting a power from a core assembly of the wireless power transmitting apparatus to a core assembly of a power receiving apparatus in an optimal state regardless of a position at which the core assembly of the power receiving apparatus is put on the core assembly of the wireless power transmitting apparatus.

Another object of the present disclosure is to provide a power transmitting coil and a wireless power transmitting apparatus capable of increasing a degree of freedom in a position at which a core assembly of a power receiving apparatus is put on a core assembly of the wireless power transmitting apparatus.

According to an example not being covered by the scope of the claims, there is provided a power transmitting coil including: at least one first coil having a current flowing in a first direction in the case of transmitting a power; and at least one second coil disposed at an outer side of the first coil and having a current flowing in a second direction opposite to the first direction in the case of transmitting the power.

According to an example not being covered by the scope of the claims, there is provided a wireless power transmitting apparatus including: a power transmitting unit switching a direct current (DC) power to generate an alternate current (AC) power; and a core assembly wirelessly transmitting the AC power generated by the power transmitting unit, wherein the core assembly includes: a power transmitting coil having the AC power applied thereto; and a core receiving the power transmitting coil therein, the power transmitting coil including: at least one first coil having a current flowing in a first direction in the case of transmitting a power; and at least one second coil disposed at an outer side of the first coil and having a current flowing in a second direction opposite to the first direction in the case of transmitting the power.

The power transmitting unit may include: a power transmission controlling unit controlling power transmission; a driving driver generating a driving signal for the power transmission under the control of the power transmission controlling unit; and a series resonant converter switching the DC power according to the driving signal generated by the driving driver to supply the AC power to the power transmitting coil.

According to the present invention as set forth in claim 1, there is provided a wireless power transmitting apparatus including: a power transmitting unit switching a DC power to generate an AC power; a core assembly including a power transmitting coil wirelessly transmitting the AC power generated by the power transmitting unit and a core receiving the power transmitting coil therein; and a switching unit provided between the power transmitting unit and the power transmitting coil of the core assembly and switching the AC power under a control of a power transmission controlling unit of the power transmitting unit, wherein the power transmitting coil includes: at least one first coil having a current flowing in a first direction in the case of transmitting a power; and at least one second coil disposed at an outer side of the first coil and having a current flowing in a second direction opposite to the first direction in the case of transmitting the power, and wherein the switching unit switches the AC power under the control of the power transmission controlling unit to selectively supply the switched power to the first coil and the second coil.

The power transmitting unit may include: in addition to the power transmission controlling unit controlling power transmission and controlling a switching operation of the switching unit; a driving driver generating a driving signal for the power transmission under the control of the power transmission controlling unit; and a series resonant converter switching the DC power according to the driving signal generated by the driving driver to output the switched power to the switching unit.

The power transmitting unit may further include: a signal transmitting unit generating a request signal requesting information on a power receiving apparatus under the control of the power transmission controlling unit and transmitting the generated request signal to the power receiving apparatus through the power transmitting coil; and a signal receiving unit receiving a signal from the power receiving apparatus through the power transmitting coil and providing the received signals to the power transmission controlling unit.

The series resonant converter may selectively supply the AC power to the first coil and the second coil according to a position at which a power receiving coil of a power receiving apparatus is put on the power transmitting coil.

The power transmission controlling unit is arranged to control the switching unit according to a position at which a power receiving coil of a power receiving apparatus is put on the power transmitting coil to selectively supply the AC power to the first coil and the second coil.

A straight line distance between inner and outer peripheral surfaces resulting from the sum of the first coil and the second coil may be larger than a diameter of a power receiving coil wirelessly receiving the power.

The first coil and the second coil are wound in directions opposite to each other.

According to an example not covered by the scope of the claims, the first coil and the second coil may be consecutively wound using one wire coated with an insulating material.

According to an example not covered by the scope of the claims, the first coil and the second coil may be individually wound using a wire coated with an insulating material and be electrically connected in series with each other by soldering an outer end portion of the first coil and an inner end portion of the second coil to each other.

According to the invention as set forth in claim 1, the first coil and the second coil are disposed in a concentric circle arrangement on the same plane.

### BRIEF DESCRIPTION OF THE DRAWINGS

Hereinafter, the present disclosure will be described in detailed through examples thereof with reference to the accompanying drawings, in some of which the same reference numeral will be used to describe the same component:
FIGS. 1A and 1B are diagrams for describing an operation of transmitting a power from a power transmitting coil of a core assembly of a wireless power transmitting apparatus to a power receiving coil of a core assembly of a power receiving apparatus;
FIGS. 2A to 2C are diagrams for describing a current inducted and flowing to the power receiving coil according to a position at which the power receiving coil is put on the power transmitting coil;
FIG. 3 is a diagram showing a configuration of a power transmitting coil not being covered by the scope of the claims but useful for understanding the present disclosure;
FIGS. 4A to 4C are diagrams for describing a current inducted and flowing to a power receiving coil according to a position at which the power receiving coil is put on the power transmitting coil not being covered by the scope of the claims but useful for understanding the present disclosure
FIG. 5 is a graph obtained by measuring voltage gain-frequency response characteristics according to the position at which the power receiving coil is put on the power transmitting coil not being covered by the scope of the claims but useful for understanding the present disclosure
FIG. 6 is a diagram showing a configuration of a power transmitting coil according to another example of the present disclosure;
FIG. 7 is a diagram showing a configuration of a power transmitting coil not being covered by the scope of the claims but useful for understanding the present disclosure;
FIG. 8 is a diagram showing a configuration of a wireless power transmitting apparatus not being covered by the scope of the claims but useful for understanding the present disclosure;
FIG. 9 is a diagram showing a configuration of a power transmitting coil according to an example useful for understanding the present invention;
FIG. 10 is a diagram showing a configuration of a wireless power transmitting apparatus according to an embodiment of the present invention; and
FIGS. 11A to 11D are diagrams for describing a direction in which a current flows to a first coil and a second coil of the power transmitting coil according to a switching operation of a switching unit in the wireless power transmitting apparatus according to another embodiment of the present invention.

### DETAILED DESCRIPTION

The following detailed description is only an example and only illustrates exemplary embodiments and examples not covered by the scope of the claims but useful for understanding the present invention.

In addition, a principle and a concept of the present disclosure are provided in order to most usefully and easily describe the present disclosure.

Therefore, for basic understanding of the present disclosure, a more detailed structure than necessary will not be provided, and several forms of the present disclosure that may be executed by those skilled in the art will be illustrated in the accompanying drawings.

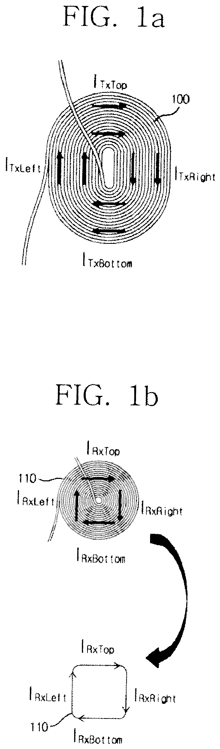

FIGS. 1A and 1B are diagrams for describing an operation of transmitting a power from a power transmitting coil of a core assembly of a wireless power transmitting apparatus to a power receiving coil of a core assembly of a power receiving apparatus. In FIGS. 1A and 1B, reference numeral 100 indicates a power transmitting coil included in a core assembly of a wireless power transmitting apparatus to transmit a power, and reference numeral 110 indicates a power receiving coil included in a core assembly of a power receiving apparatus to receive the power.

The power transmitting coil 100 and the power receiving coil 110, which are formed by winding wires coated with an insulating material in a clockwise direction (or a counterclockwise direction), have different forms. In addition, the power transmitting coil 100 generally has a significantly larger size as compared with the power receiving coil 110, due to characteristics thereof.

For example, the power transmitting coil 100 has an oval shape and has a horizontal width of about 57 mm and a vertical width of about 70 mm in FIG. 1, and the power receiving coil 110 has a circular shape and a diameter of an outer peripheral edge of about 32 mm.

As shown in FIG. 1A, when a power to be transmitted to the power receiving apparatus is supplied to the power transmitting coil 100, a top current I_{TxTop} flowing in a region at a top position when viewed in FIG. 1A, a right current I_{TxRight} flowing in a region at a right position when viewed in FIG. 1A, a bottom current I_{TxBottom} flowing in a region at a bottom position when viewed in FIG. 1A, and a left current I_{TxLeft} flowing in a region at a left position when viewed in FIG. 1A flow to the power transmitting coil 100 in a first direction, for example, a clockwise direction, such that magnetic fluxes are generated.

Further, in the case in which the power receiving coil 110 is put on the power transmitting coil 100, the magnetic fluxes generated in the power transmitting coil 100 are interlinked with the power receiving coil 110, such that a top current I_{RxTop} flowing in a region at a top position when viewed in FIG. 1B, a right current I_{RxRight} flowing in a region at a right position when viewed in FIG. 1B, a bottom current I_{RxBottom} flowing in a region at a bottom position when viewed in FIG. 1B, and a left current I_{RxLeft} flowing in a region at a left position when viewed in FIG. 1B flow to the power receiving coil 110 in the clockwise direction, as shown in FIG. 1B.

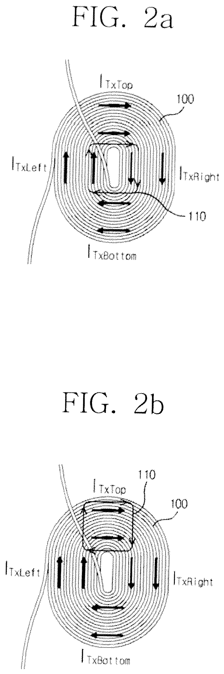

As shown in FIG. 2A, when the power receiving coil 110 is put on a central position of the power transmitting coil 100, all of the directions of the top current I_{TxTop}, the right current I_{TxRight}, the bottom current I_{TxBottom}, and the left current I_{TxLeft} flowing to the power transmitting coil 100 and the top current I_{RxTop}, the right current I_{RxRight}, the bottom current I_{RxBottom}, and the left current I_{RxLeft} induced and flowing to the power receiving coil 110 coincide with one another.

Therefore, the power transmitting coil 100 and the power receiving coil 110 may be entirely linked to each other so that the magnetic field interlinkage is smoothly made, and the power receiving coil 110 may receive the power in an optimal state.

However, a user may not accurately put the power receiving coil 110 of the power receiving apparatus at the central position of the power transmitting coil 100. In addition, even though the user accurately puts the power receiving coil 110 of the power receiving apparatus at the central position of the power transmitting coil 100, a vibration is generated in a portable terminal having the power receiving apparatus mounted therein to move the portable terminal, such that the power receiving coil 110 of the power receiving apparatus may deviate from the central position of the power transmitting coil 100.

As shown in FIG. 2B, when the power receiving coil 110 is put on the top position of the power transmitting coil 100, that is, a position at which the top current I_{TxTop} flows to the power transmitting coil 100, directions of the top current I_{TxTop} flowing to the power transmitting coil 100 and the top current I_{RxTop} induced and flowing to the power receiving coil 110 coincides with each other; however, the bottom current I_{RxBottom} of the power receiving coil 110 flows at the position at which the top current I_{TxTop} flows to the power transmitting coil 100, such that directions of the top current I_{TxTop} and the bottom current I_{RxBottom} become opposite to each other.

Therefore, the power transmitting coil 100 and the power receiving coil 110 are linked to each other so that magnetic flux interlinkages of the top current I_{TxTop} flowing to the power transmitting coil 100 and the bottom current I_{RxBottom} flowing to the power receiving coil 110 are offset against each other, and the power induced to the power receiving coil 110 becomes relatively smaller than the power in the case shown in FIG. 2A.

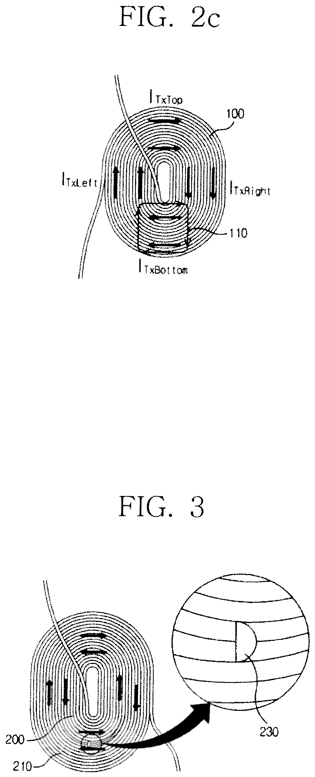

As shown in FIG. 2C, when the power receiving coil 110 is put on the bottom position of the power transmitting coil 100, that is, a position at which the bottom current I_{TxBottom} flows to the power transmitting coil 100, directions of the bottom current I_{TxBottom} flowing to the power transmitting coil 100 and the bottom current I_{RxBottom} induced and flowing to the power receiving coil 110 coincides with each other; however, the top current I_{RxTop} flows to the power receiving coil 110 at the position at which the bottom current I_{TxBottom} flows to the power transmitting coil 100, such that directions of the bottom current I_{TxBottom} and the top current I_{RxTop} become opposite to each other.

Therefore, the power transmitting coil 100 and the power receiving coil 110 are linked to each other so that so that magnetic flux interlinkages of the bottom current I_{TxBottom} flowing to the power transmitting coil 100 and the top current I_{RxTop} flowing to the power receiving coil 110 are offset against each other, and the power induced to the power receiving coil 110 becomes relatively smaller than the power in the case shown in FIG. 2A.

As described above, strength of the power from the power transmitting coil 100 to the power receiving coil 110 is changed according to the position of the power receiving coil 110, such that a degree of freedom in the position at which the power receiving coil 110 is put on the power transmitting coil 100 is significantly limited, which needs to be improved.

FIG. 3 is a diagram showing a configuration of a power transmitting coil not being covered by the scope of the claims but that is useful for understanding the disclosure. In FIG. 3, reference numeral 200 indicates a first coil seated on a central portion of a core (not shown). The first coil 200, which is wound in a first direction, for example, a counterclockwise direction, has a current flowing in the first direction in the case of transmitting the power.

Reference numeral 210 indicates a second coil seated on the core and positioned at an outer side of the first coil 200. The second coil 210 is wound in a second direction, for example, a clockwise direction, opposite to the first direction. In addition, the second coil 210 may be connected in series with the first coil 200 as shown in a partially enlarged view of FIG. 3 and has a current flowing in the second direction, for example, the clockwise direction, opposite to the direction in which the current flows in the first coil 200 in the case of transmitting the power.

Here, as a manufacturing method of the power transmitting coil, there may be several methods. For example, the power transmitting coil may be manufactured by consecutively winding the first coil 200 and the second coil 210 using one wire coated with an insulating material to connect the first coil 200 and the second coil 210 in series with each other. Alternatively, the power transmitting coil may be manufactured by individually winding the first coil 200 and the second coil 210, overturning any one of the first coils 200 and the second coil 210, and soldering 230 an outer end portion of the first coil 200 and an inner end portion of the second coil 210 to each other to connect the first coil 200 and the second coil 210 in series with each other. Alternatively, the power transmitting coil may be manufactured by appropriately setting a predetermined dedicated winding machine according to a work condition and performing a series of winding processes using the predetermined dedicated winding machine or winding the first coil and winding the second coil in a changed direction. Since a specific manufacturing method of the power transmitting coil is not relevant to the intention of the present disclosure, a detailed description thereof will be omitted.

In addition, a straight line distance between inner and outer peripheral surfaces resulting from the sum of the first coil 200 and the second coil 210 is larger than a diameter of the power receiving coil included in the power receiving apparatus.

In the case in which the power transmitting coil according to the example not being covered by the scope of the claims but useful for understanding the present disclosure having the above-mentioned configuration transmits the power, an alternate current (AC) power is applied to the first coil 200 and the second coil 210.

In this case, the first coil 200 has the current flowing in the first direction, for example, the counterclockwise direction to transmit the power to the power receiving coil.

In addition, the second coil 210 has the current flowing in the second direction, for example, the clockwise direction, opposite to the first direction to transmit the power to the power receiving coil.

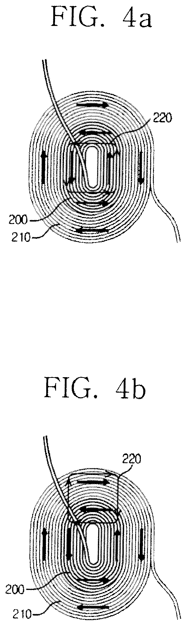

FIGS. 4A to 4C are diagrams for describing a current inducted and flowing to a power receiving coil according to a position at which the power receiving coil is put on the power transmitting coil of the example not being covered by the scope of the claims but that is useful for understanding the present disclosure.

Referring to FIG. 4A, in the case in which the power receiving coil 220 is put on the central portion of the power transmitting coil including the first coil 200 and the second coil 210, the power receiving coil 220 is positioned on the first coil 200.

In this case, all of the directions of a top current I_{TxTop}, a right current I_{TxRight}, a bottom current I_{TxBottom}, and a left current I_{TxLeft} flowing to the first coil 200 and a top current I_{RxTop}, a right current I_{RxRight}, a bottom current I_{RxBottom}, and a left current I_{RxLeft} induced and flowing to the power receiving coil 220 coincide with one another.

Therefore, the first coil 200 and the power receiving coil 220 may be entirely linked to each other so that magnetic field interlinkage is smoothly made, and the power receiving coil 220 may receive the power in an optimal state.

Referring to FIG. 4B, in the case in which the power receiving coil 220 is put on the top of the power transmitting coil including the first coil 200 and the second coil 210, the bottom of the power receiving coil 220 is positioned on the top of the first coil 200, and the top thereof is positioned on the top of the second coil 210.

In this case, directions of the top currents I_{TxTop} each flowing to the second coil 210 and the first coil 200 and directions of the top current I_{RxTop} and the bottom current I_{RxBottom} induced and flowing to the power receiving coil 220 coincide with one another.

Therefore, the second and first coils 210 and 200 and the power receiving coil 220 are linked to each other so that magnetic flux interlinkages of the top currents I_{TxTop} each flowing to the second coil 210 and the first coil 200 and the top current I_{RxTop} and the bottom current I_{RxBottom} of the power receiving coil 220 coincide with other. Therefore, the power receiving coil 220 may receive the power in an optimal state even though the power is relatively slightly smaller as compared with the case shown in FIG. 4A.

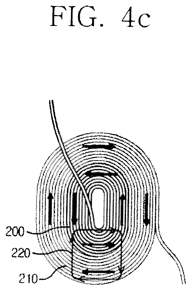

In addition, referring to FIG. 4C, in the case in which the power receiving coil 220 is put on the bottom of the power transmitting coil including the first coil 200 and the second coil 210, the top of the power receiving coil 220 is positioned on the bottom of the first coil 200, and the bottom thereof is positioned on the bottom of the second coil 210.

Also in this case, directions of the top current I_{TxTop} and the bottom current I_{TxBottom} flowing to the first coil 200 and directions of the top current I_{RxTop} and the bottom current I_{RxBottom} induced and flowing to the power receiving coil 220 coincide with one another.

Therefore, the first and second coils 200 and 210 and the power receiving coil 220 are linked to each other so that magnetic flux interlinkages of the bottom current I_{TxBottom} of the first coil 200 and the second coil 210 and the top current I_{RxTop} and the bottom current I_{RxBottom} of the power receiving coil 220 coincide with other. Therefore, the power receiving coil 220 may receive the power in an optimal state even though the power is relatively slightly smaller as compared with the case shown in FIG. 4A.

In order to measure frequency response characteristics according to a change in a position at which the power receiving coil 220 is put on the first coil 200 and the second coil 210 of the power transmitting coil according to the example not being covered by the scope of the claims but useful for understanding the present disclosure as described above, a characteristic analysis experiment of a voltage gain according to a variable frequency was performed to obtain a result as shown in the following Table 1.

**[Table 1]**

| Position of power receiving coil | Turns | | |
|---|---|---|---|
| | Frequency | Gain voltage (dB) | Mutual inductance (µH) |
| Top position (See FIG. 4B) | 160kHz | 17 | 4 |
| Central position (See FIG. 4A) | 160kHz | 17.5 | 4.15 |
| Bottom position (See FIG. 4C) | 160kHz | 17.9 | 4.19 |

In the above Table 1, a mutual inductance was calculated using Equation V_{Rx}=wMI_{Tx}.

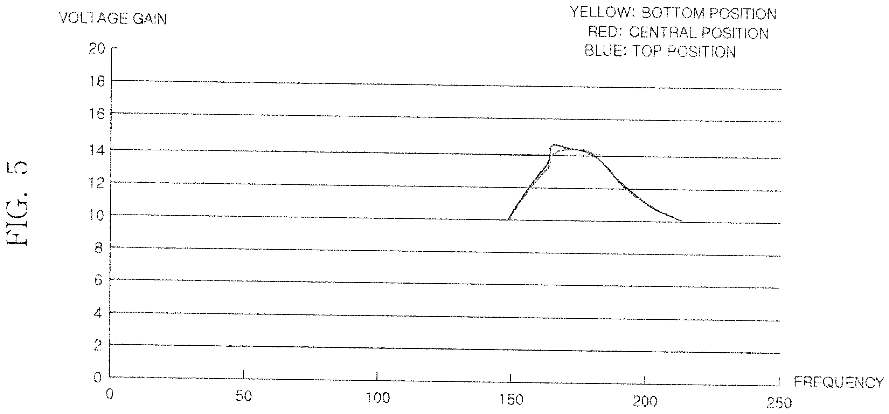

In addition, a graph as shown in FIG. 5 was obtained based on the result obtained by measuring voltage gain-frequency response characteristics according to the position at which the power receiving coil 220 is put on the first coil 200 and the second coil 210 of the power transmitting coil according to the example not being covered by the scope of the claims but useful for understanding the present disclosure. Here, a position of the power receiving coil 220 used in the experiment is based on the top position of the power transmitting coil as shown in FIG. 4B, the bottom position of the power transmitting coil as shown in FIG. 4C, and the central position of the power transmitting coil as shown in FIG. 4A.

As seen in Table 1 and FIG. 5, a change in a resonance frequency according to the position at which the power receiving coil 220 is put on the power transmitting coil was small, and a change range of a voltage gain according to the position at which the power receiving coil 220 is put on the power transmitting coil was 1 dB or less, which is significantly smaller than that of the power transmitting coil according to the related art. In addition, it could be appreciated that a change range of a mutual inductance is relatively significantly small due to the small change range of the voltage gain.

By comparison, in the case of the related art as shown in FIGS. 2A to 2C, change ranges of a voltage gain and a mutual inductance according to the position at which the power receiving coil 110 is put on the power transmitting coil 100 were significantly large as shown in the following Table 2.

**[Table 2]**

| Position of power receiving coil | Turns | | |
|---|---|---|---|
| | Frequency | Gain voltage (dB) | Mutual inductance (µH) |
| Top position (See FIG. 2B) | 100kHz | 12.2 | 5 |
| Central position (See FIG. 2A) | 100kHz | 10 | 4.16 |
| Bottom position (See FIG. 2C) | 100kHz | 9 | 3.8 |

Meanwhile, the case in which the wireless power transmitting apparatus according to the example not being covered by the scope of the claims but useful for understanding the present disclosure includes only one power transmitting coil has been described above by way of example.

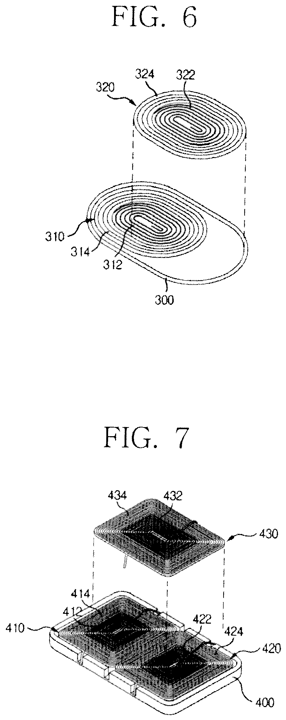

However, in executing the present disclosure, the present disclosure is not limited thereto. That is, as shown in FIG. 6, a first power transmitting coil 310 and a second power transmitting coil 320 may also be provided on one core 300.

In this case, in an example not being covered by the scope of the claims but useful for understanding the present disclosure, the first power transmitting coil 310 and the second power transmitting coil 320 may include first coils 312 and 322 wound in a first direction and second coils 314 and 324 seated at outer sides of the first coils 312 and 322 and wound in a second direction opposite to the first direction, respectively.

Further, in executing the present disclosure, as shown in FIG. 7, a first power transmitting coil 410, a second power transmitting coil 420, and a third power transmitting coil 430 may also be provided on one core 400.

Also in this case, in an example not being covered by the scope of the claims but useful for understanding the present disclosure, the first power transmitting coil 410 the second power transmitting coil 420, and the third power transmitting coil 430 may include first coils 412, 422, and 432 wound in a first direction and second coils 414, 424, and 434 seated at outer sides of the first coils 412, 422, and 432 and wound in a second direction opposite to the first direction, respectively.

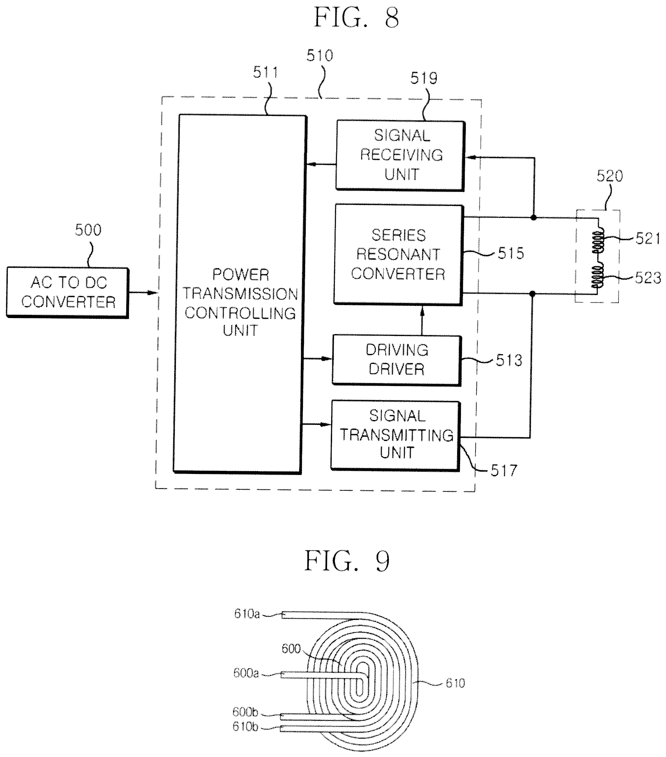

FIG. 8 is a circuit diagram showing a configuration of a wireless power transmitting apparatus of an example not being covered by the scope of the claims but that is useful for understanding the present disclosure. Since configuration examples of circuit diagrams according to the structures of the power transmitting coils corresponding to the cases of FIGS. 3, 6 and 7 and modified examples thereof may be easily modified and executed by those skilled in the art with reference to the following description of FIG. 8, a detailed description thereof will be omitted. Hereinafter, the wireless power transmitting apparatus of FIG. 8 using one power transmitting coil will be representatively described in order to assist in understanding the present disclosure.

Referring to FIG. 8, the wireless power transmitting apparatus of the example not being covered by the scope of the claims is configured to include an alternate current (AC) to a direct current (DC) converter 500 converting a commercial AC power input from the outside into a DC power, a power transmitting unit 510 supplying a power to be wirelessly transmitted, and a core assembly 520 wirelessly transmitting the power.

Although the case in which the AC to DC converter 500 is provided integrally with the wireless power transmitting apparatus according to examples not being covered by the scope of the claims but useful for understanding the present disclosure has been described by way of example, the AC to DC converter 500 may also be separately provided at an outer side of the wireless power transmitting apparatus according to an example not being covered by the scope of the claims but useful for understanding the present disclosure to supply the DC power to the power transmitting unit 510, in executing the present disclosure.

The power transmitting unit 510 switches the DC power converted by the AC to DC converter 500 and supplies the switched power to a first coil 521 and a second coil 523 included in the core assembly 520 to allow the power to be wirelessly transmitted.

The power transmitting unit 510 may include a power transmission controlling unit 511, a driving driver 513, a series resonant converter 515, a signal transmitting unit 517, and a signal receiving unit 519.

The power transmission controlling unit 511 controls that the power is wirelessly transmitted through the first coil 521 and the second coil 523 of the core assembly 520.

The driving driver 513 generates a driving signal for transmitting the power through the first coil 521 and the second coil 523 of the core assembly 520 under the control of the power transmission controlling unit 511.

The series resonant converter 515 switches the DC power output by the AC to DC converter 500 according to the driving signal generated by the driving driver 513 and supplies the switched power to the first coil 521 and the second coil 523.

The signal transmitting unit 517 generates a request signal requesting information on a power receiving apparatus under the control of the power transmission controlling unit 511 and transmits the generated request signal to the power receiving apparatus through the first coil 521 and the second coil 523.

The signal receiving unit 519 receives an information signal, a charging state signal, and the like, transmitted by the power receiving apparatus through the first coil 521 and the second coil 523 and provides the received signals to the power transmission controlling unit 511.

In the case in which the wireless power transmitting apparatus according to the example not being covered by the scope of the claims but useful for understanding the present disclosure having the above-mentioned configuration transmits the power, it should first judge whether or not a power receiving unit of the power receiving apparatus may receive the power. That is, the wireless power transmitting apparatus should judge whether or not the power receiving unit of the power receiving apparatus is positioned at a position of the core assembly 520 included in the wireless power transmitting apparatus.

To this end, the power transmission controlling unit 511 of the power transmitting unit 510 controls the driving driver 513 to generate the driving signal for detecting a change in a load.

The driving signal generated by the driving driver 513 is input to the series resonant converter 515.

The series resonant converter 515, which includes a plurality of switching devices such as a plurality of transistors, a plurality of metal oxide semiconductor field effect transistors (MOSFETs), or the like, selectively switches the plurality of switching devices according to the driving signal generated by the driving driver 513 to switch a DC power, thereby generating an AC power.

The AC power generated by the series resonant converter 515 is output to the first coil 521 and the second coil 523 of the core assembly 520, and the first coil 521 and the second coil 523 are series-resonated by the AC power generated by the series resonant converter 515.

In this state, the signal receiving unit 519 receives signals of the first coil 521 and the second coil 523 and outputs the received signals to the power transmission controlling unit 511.

The power transmission controlling unit 511 receives the signal of the signal receiving unit 519 and judges whether or not a change in a load has been generated in the first coil 521 and the second coil 523 of the core assembly 520 using the received signal.

That is, in the case in which the power receiving unit of the power receiving apparatus does not approach the core assembly 520, a change in an impedance is not generated in the first coil 521 and the second coil 523.

In this case, the signal receiving unit 519 may receive only a signal having a frequency according to the driving signal generated by the driving driver 513, and the power transmission controlling unit 511 may judge that the change in the load has not been generated in the first coil 521 and the second coil 523 using the signal of the signal receiving unit 519.

Further, when a user allows the power receiving apparatus to approach the first coil 521 and the second coil 523 of the core assembly 520 in order to charge the power in the power receiving apparatus, the change in the impedance is generated in the first coil 521 and the second coil 523. The frequency of the signal for detecting the change in the load, applied to the first coil 521 and the second coil 523 is changed according to the change in the impedance.

In this case, the signal receiving unit 519 may receive the signal having the frequency changed according to the change in the impedance, and the power transmission controlling unit 511 judges that the change in the load has been generated in the first coil 521 and the second coil 523 using the signal of the signal receiving unit 519.

When it is judged that the change in the load has been generated, the power transmission controlling unit 511 controls the signal transmitting unit 517 to generate the request signal requesting the information on the power receiving apparatus, for example, a request signal requesting an identification (ID) of the power receiving apparatus, and the generated request signal is transmitted to the power receiving apparatus through the first coil 521 and the second coil 523.

Further, the power transmission controlling unit 511 receives the signal of the signal receiving unit 519 to judge whether or not an ID signal of the power receiving apparatus has been received.

That is, the change in the impedance is generated in the first coil 521 and the second coil 523 due to several causes. For example, in the case in which the power receiving apparatus approaches the first coil 521 and the second coil 523 as described above, the change in the impedance may be generated. Further, also in the case in which foreign materials other than the power receiving apparatus approach the first coil 521 and the second coil 523, the change in the impedance may be generated.

In the case in which the impedance is generated by the foreign materials, when the power is transmitted through the first coil 521 and the second coil 523, the power is unnecessarily consumed.

Therefore, the power transmission controlling unit 511 transmits the request signal request the ID to the power receiving apparatus in the case in which it is judged that the change in the load has been generated in the first coil 521 and the second coil 523 and judges that the impedance has been changed in the first coil 521 and the second coil 523 by the power receiving apparatus in the case in which the ID signal is received from the power receiving apparatus according to the request signal.

When the ID signal is received, the power transmission controlling unit 511 judges that the power receiving apparatus has approached the first coil 521 and the second coil 523 and controls the driving driver 513 to generate the driving signal for transmitting the power.

The switching devices of the series resonant converter 515 switch the DC power while being switched according to the driving signal generated by the driving driver 513 to generate the AC power and apply the generated AC power to the first coil 521 and the second coil 523, such that the power is wirelessly transmitted from the first coil 521 and the second coil 523 to the power receiving apparatus.

In this state, the power transmission controlling unit 511 receives the signal of the signal receiving unit 519 to judge whether or not a charging completion signal has been received from the power receiving apparatus and controls the driving driver 513 to end the power transmission in the case in which it is judged that the charging completion signal has been received.

Meanwhile, the case in which the power transmitting coil according to the example not being covered by the scope of the claims but useful for understanding the present disclosure includes the first coil and the second coil that are connected in series with each other has been described above by way of example.

However, in executing the present disclosure, the present disclosure is not limited thereto. That is, as shown in FIG. 9, the power transmitting coil includes a first coil 600 wound in a first direction and a second coil 610 wound in a second direction opposite to the first direction and is configured so that a power to be transmitted is selectively supplied to each of the first coil 600 and the second coil 610.

It is preferable that a wireless power transmitting apparatus according to still another example of the present disclosure having the above-mentioned configuration allows the series resonant converter 515 to selectively supply the power the first coil 600 and the second coil 610 according to the position at which the power receiving coil is put on the power transmitting coil.

For example, in the case in which the power receiving coil is put only on the first coil 600, the series resonant converter 515 supplies the power only to the first coil 600 to transmit the power to the power receiving apparatus.

In the case in which the power receiving coil is put only on the second coil 610, the series resonant converter 515 supplies the power only to the second coil 610 to transmit the power to the power receiving apparatus.

In the case in which the power receiving coil is put on both of the first coil 600 and the second coil 610, the series resonant converter 515 supplies the power to both of the first coil 600 and the second coil 610 to transmit the power to the power receiving apparatus.

Here, since an operation of detecting the position at which the power receiving coil is put on the power transmitting coil is a general operation, a detailed description thereof will be omitted.

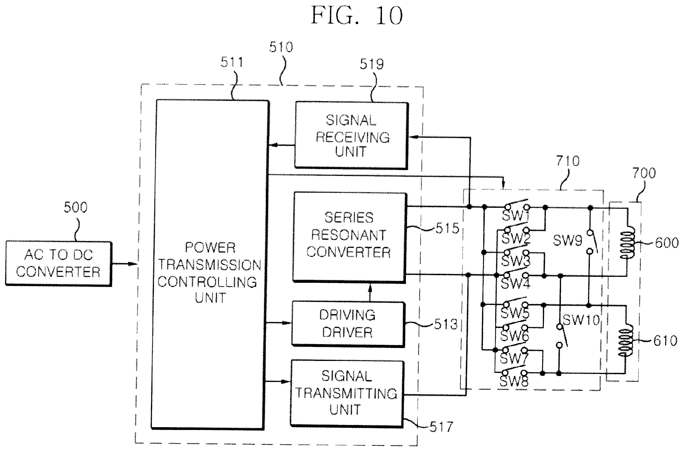

FIG. 10 is a diagram showing a configuration of a wireless power transmitting apparatus according to an embodiment of the present invention. Referring to FIG. 10, the wireless power transmitting apparatus according to an embodiment of the present invention includes a switching unit 710 disposed between a series resonant converter 515 and a first coil 600 and a second coil 610 that are included in a core assembly 700 and including a plurality of switches SW1 and SW10. In addition, each of the plurality of switches SW1 to SW10 included in the switching unit 710 is switched under a control of a power transmission controlling unit 511.

In the wireless power transmitting apparatus according to the embodiment of the present invention having the above-mentioned configuration, the power transmission controlling unit 511 controls the switching of the plurality of switches SW1 to SW10 included in the switching unit 710 to selectively supply the power to the first coil 600 and the second coil 610, thereby making it possible to wirelessly transmit the power and selectively adjust directions of currents flowing to the first coil 600 and the second coil 610.

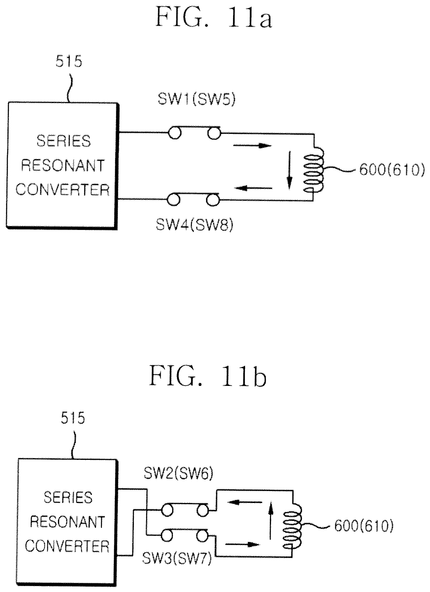

FIGS. 11A to 11D are diagrams for simply describing that a direction in which a current flows to a first coil 600 and a second coil 610 of the power transmitting coil may be selectively changed according to a switching operation of a switching unit in the wireless power transmitting apparatus according to another embodiment of the present invention.

Referring to FIG. 11A, in the case in which the power transmission controlling unit 511 controls the switching unit 710 to switch on the switches SW1 and SW4, since the power is supplied only to the first coil 600, the power may be wirelessly transmitted through the first coil 600. Further, in the case the switches SW5 and SW8 are switched on, since the power is supplied only to the second coil 610, the power may be wirelessly transmitted through the second coil 610.

Referring to FIG. 11B, in the case in which the power transmission controlling unit 511 controls the switching unit 710 to switch on the switches SW2 and SW3, since the power is supplied only to the first coil 600, the power may be wirelessly transmitted through the first coil 600. Further, in the case the switches SW6 and SW7 are switched on, since the power is supplied only to the second coil 610, the power may be wirelessly transmitted through the second coil 610. In this case, the first coil 600 and the second coil 610 have a current flows in a direction opposite to the current direction in the case of FIG. 11A described above.

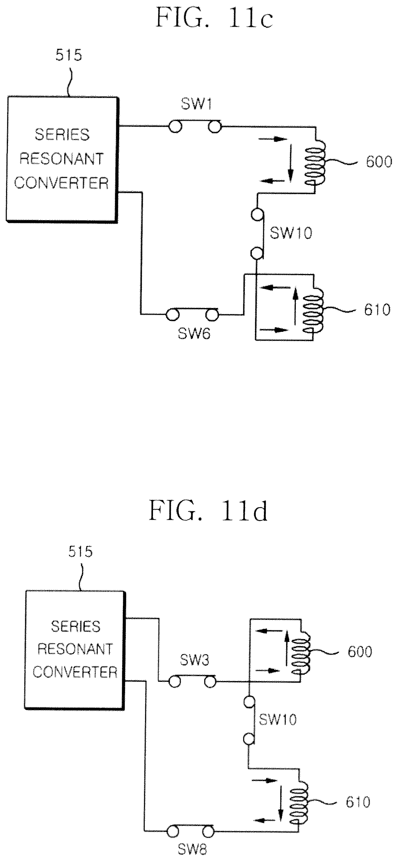

Referring to FIG. 11C, in the case in which the power transmission controlling unit 511 controls the switching unit 710 to switch on the switches SW1, SW6, and SW10, since the power is supplied to both of the first coil 600 and the second coil 610, the power may be wirelessly transmitted through both of the first coil 600 and the second coil 610. In this case, currents flow in directions opposite to each other in the first coil 600 and the second coil 610, such that magnetic fluxes are generated in directions opposite to each other.

Referring to FIG. 11D, in the case in which the power transmission controlling unit 511 controls the switching unit 710 to switch on the switches SW3, SW8, and SW9, since the power is supplied to both of the first coil 600 and the second coil 610, the power may be wirelessly transmitted through both of the first coil 600 and the second coil 610. In this case, currents flow in directions opposite to each other in the first coil 600 and the second coil 610, such that magnetic fluxes are generated in directions opposite to each other.

According to the embodiment of the present invention, the power transmitting coil includes the first coil wound in the first direction and the second coil wound in the second direction opposite to the first direction, thereby making it possible to transmit the power in an optimal state regardless of a position at which the power receiving apparatus is positioned on the power transmitting coil. Therefore, a degree of freedom in a position at which the power receiving apparatus charging the power is put may be set to be wide.

In addition, digital data may be smoothly transmitted between the wireless power transmitting apparatus and the power receiving apparatus.

Although the examples of the present disclosure have been disclosed for illustrative purposes, those skilled in the art will appreciate that various modifications, additions and substitutions are possible, without departing from the scope of the invention as disclosed in the accompanying claims.

Accordingly, the scope of the present invention is not construed as being limited to the described embodiments but is defined by the appended claims.

## Claims

1. . A wireless power transmitting apparatus comprising:
a power transmitting unit (510) arranged to switch a DC power to generate an AC power;
a core assembly comprising a power transmitting coil arranged to wirelessly transmit the AC power generated by the power transmitting unit, and a core arranged to receive the power transmitting coil therein; and
a switching unit (710) provided between the power transmitting unit (510) and the power transmitting coil of the core assembly and arranged to switch the AC power,
wherein the power transmitting coil includes:
at least one first coil (600) wound in a first direction, and arranged to have a current flowing in the first direction in the case of transmitting a power; and
at least one second coil (610) wound in a second direction, opposite to the first direction, wherein the second coil (610) is disposed at an outer side of the first coil (600) and arranged to have a current flowing in the second direction in the case of transmitting the power,
wherein:
the first coil (600) and the second coil (610) are disposed in a concentric circle arrangement on the same plane;
the power transmitting unit (510) includes a power transmission controlling unit (511) arranged to control power transmission and to control a switching operation of the switching unit;
the switching unit is arranged to switch the AC power under a control of the power transmission controlling unit (511) to selectively supply the switched power to the first coil and the second coil and to selectively adjust directions of currents flowing to the first coil and the second coil according to a position at which a power receiving coil of a power receiving apparatus is put on the power transmitting coil;
wherein the power transmission controlling unit (511) is arranged to control the switching unit (710) such that:
the power is supplied only to the first coil (600) to transmit the power to the power receiving apparatus in the case where the power receiving coil is put only on the first coil (600);
the power is supplied only to the second coil (610) to transmit the power to the power receiving apparatus in the case where the power receiving coil is put only on the second coil (610); and
the power is supplied to both the first coil (600) and the second coil (610) to transmit the power to the power receiving apparatus in the case where the power receiving coil is put on both of the first coil (600) and the second coil (610).

2. . The wireless power transmitting apparatus of claim 1, wherein a straight line distance between inner and outer peripheral surfaces resulting from the sum of the first coil and the second coil is larger than a diameter of a power receiving coil wirelessly receiving the power.

3. . The wireless power transmitting apparatus of claim 1 or claim 2, wherein the power transmitting unit (510) includes:
a driving driver (513) arranged to generate a driving signal for the power transmission under the control of the power transmission controlling unit (511); and
a series resonant converter (515) arranged to switch the DC power according to the driving signal generated by the driving driver (513) to output the switched power to the switching unit.

4. . The wireless power transmitting apparatus of claim 3, wherein the power transmitting unit (510) further includes:
a signal transmitting unit (517) arranged to generate a request signal requesting information on a power receiving apparatus under the control of the power transmission controlling unit (511) and to transmit the generated request signal to the power receiving apparatus through the power transmitting coil; and
a signal receiving unit (519) arranged to receive a signal from the power receiving apparatus through the power transmitting coil and provide the received signals to the power transmission controlling unit (511).

## Patentansprüche

1. Drahtlose Leistungsübertragungsvorrichtung, umfassend:
eine Leistungsübertragungseinheit (510), die angeordnet ist, um eine DC-Leistung zu schalten, um eine AC-Leistung zu erzeugen;
eine Kernbaugruppe, die eine Leistungsübertragungsspule, die angeordnet ist, um die von der Leistungsübertragungseinheit erzeugte AC-Leistung drahtlos zu übertragen, und einen Kern umfasst, der angeordnet ist, um die Leistungsübertragungsspule darin aufzunehmen; und
eine Schalteinheit (710), die zwischen der Leistungsübertragungseinheit (510) und der Leistungsübertragungsspule der Kernbaugruppe bereitgestellt ist und angeordnet ist, um die AC-Leistung zu schalten,
wobei die Leistungsübertragungsspule beinhaltet:
mindestens eine erste Spule (600), die in eine erste Richtung gewickelt ist und so angeordnet ist, dass im Fall des Übertragens einer Leistung ein Strom darin in die erste Richtung fließt; und
mindestens eine zweite Spule (610), die in eine zweite Richtung entgegengesetzt zur ersten Richtung gewickelt ist, wobei die zweite Spule (610) an einer Außenseite der ersten Spule (600) vorgesehen und so angeordnet ist, dass im Fall des Übertragens einer Leistung ein Strom darin in die zweite Richtung fließt,
wobei:
die erste Spule (600) und die zweite Spule (610) in einer konzentrischen Kreisanordnung auf derselben Ebene angeordnet sind;
die Leistungsübertragungseinheit (510) eine Leistungsübertragungssteuereinheit (511) beinhaltet, die so angeordnet ist, dass sie die Leistungsübertragung steuert und einen Schaltvorgang der Schalteinheit steuert;
die Schalteinheit angeordnet ist, um die AC-Leistung unter einer Steuerung der Leistungsübertragungssteuereinheit (511) zu schalten, um den geschalteten Strom selektiv der ersten Spule und der zweiten Spule zuzuführen und die Richtungen von Strömen, die zu der ersten Spule und der zweite Spule fließen, gemäß einer Position anzupassen, in der eine Leistungsempfangsspule einer Leistungsempfangsvorrichtung auf die Leistungsübertragungsspule gelegt wird;
wobei die Leistungsübertragungssteuereinheit (511) angeordnet ist, um die Schalteinheit (710) so zu steuern, dass:
die Leistung nur an die erste Spule (600) zugeführt wird, um die Leistung an die Leistungsempfangsvorrichtung zu übertragen, falls die Leistungsempfangsspule nur auf die erste Spule (600) gelegt wird;
die Leistung nur an die zweite Spule (600) zugeführt wird, um die Leistung an die Leistungsempfangsvorrichtung zu übertragen, falls die Leistungsempfangsspule nur auf die zweite Spule (610) gelegt wird; und
die Leistung sowohl an die erste Spule (600) also auch die zweite Spule (610) zugeführt wird, um die Leistung an die Leistungsempfangsvorrichtung zu übertragen, falls die Leistungsempfangsspule sowohl auf die erste Spule (600) als auch auf die zweite Spule (610) gelegt wird.

2. Drahtlose Leistungsübertragungsvorrichtung nach Anspruch 1, wobei ein geradliniger Abstand zwischen Innen- und Außenumfangsflächen, der sich aus der Summe der ersten Spule und der zweiten Spule ergibt, größer ist als ein Durchmesser einer Leistungsempfangsspule, die die Leistung drahtlos empfängt.

3. Drahtlose Leistungsübertragungsvorrichtung nach Anspruch 1 oder Anspruch 2, wobei die Leistungsübertragungseinheit (510) beinhaltet:
einen Antriebstreiber (513), der angeordnet ist, um ein Antriebssignal für die Leistungsübertragung unter der Steuerung der Leistungsübertragungssteuereinheit (511) zu erzeugen; und
einen Reihenresonanzwandler (515), der so angeordnet ist, dass er die DC-Leistung gemäß dem durch den Antriebstreiber (513) erzeugten Antriebssignal schaltet, um die geschaltete Leistung an die Schalteinheit auszugeben.

4. Drahtlose Leistungsübertragungsvorrichtung nach Anspruch 3, wobei die Leistungsübertragungseinheit (510) ferner beinhaltet:
eine Signalübertragungseinheit (517), die so angeordnet ist, dass sie ein Anforderungssignal erzeugt, das Informationen über eine Leistungsempfangsvorrichtung unter der Steuerung der Leistungsübertragungssteuereinheit (511) anfordert, und das erzeugte Anforderungssignal durch die Leistungsübertragungsspule an die Leistungsempfangsvorrichtung überträgt; und
eine Signalempfangseinheit (519), die so angeordnet ist, dass sie ein Signal von der Leistungsempfangsvorrichtung durch die Leistungsübertragungsspule empfängt und die empfangenen Signale an die Leistungsübertragungssteuereinheit (511) bereitstellt.

## Revendications

1. Appareil de transmission de puissance électrique sans fil comprenant :
une unité de transmission de puissance électrique (510), agencée pour convertir une puissance électrique en courant continu en puissance électrique en courant alternatif ;
un ensemble noyau comprenant une bobine de transmission de puissance électrique, agencée pour transmettre sans fil la puissance électrique en courant alternatif générée par l'unité de transmission de puissance électrique, et un noyau, agencé pour recevoir en son sein la bobine de transmission de puissance électrique ; et
une unité de commutation (710) disposée entre l'unité de transmission de puissance électrique (510) et la bobine de transmission de puissance électrique de l'ensemble de noyau et agencée pour commuter la puissance électrique en courant alternatif,
la bobine de transmission de puissance électrique comprenant :
au moins une première bobine (600), enroulée selon un premier sens et agencée pour qu'un courant circule selon le premier sens en cas de transmission d'une puissance électrique ; et
au moins une seconde bobine (610), enroulée selon un second sens opposé au premier sens, la seconde bobine (610) étant disposée sur un côté extérieur de la première bobine (600) et agencée pour qu'un courant circule selon le second sens en cas de transmission de la puissance électrique,
la première bobine (600) et la seconde bobine (610) étant disposées en cercles concentriques dans le même plan ;
l'unité de transmission de puissance électrique (510) comprenant une unité de commande de transmission de puissance électrique (511), agencée pour commander la transmission de puissance électrique et pour commander une opération de commutation de l'unité de commutation ;
l'unité de commutation étant agencée pour commuter le courant alternatif sous une commande de l'unité de commande de transmission de puissance électrique (511) pour alimenter sélectivement en puissance électrique commutée la première bobine et la seconde bobine et pour régler sélectivement les sens des courants circulant vers la première bobine et vers la seconde bobine selon une position dans laquelle une bobine de réception de puissance électrique d'un appareil de réception de puissance électrique est placée sur la bobine de transmission de puissance électrique ;
l'unité de commande de transmission de puissance électrique (511) étant agencée pour commander l'unité de commutation (710) pour que :
la puissance électrique ne soit fournie qu'à la première bobine (600) pour transmettre la puissance électrique à l'appareil de réception de puissance électrique si la bobine de réception de puissance électrique n'est placée que sur la première bobine (600) ;
la puissance électrique ne soit fournie qu'à la seconde bobine (600) pour transmettre la puissance électrique à l'appareil de réception de puissance électrique si la bobine de réception de puissance électrique n'est placée que sur la seconde bobine (610) ; et
la puissance électrique soit fournie à la fois à la première bobine (600) et à la seconde bobine (610) pour transmettre la puissance électrique à l'appareil de réception de puissance électrique si la bobine de réception de puissance électrique est placée à la fois sur la première bobine (600) et sur la seconde bobine (610).

2. Appareil de transmission de puissance électrique sans fil selon la revendication 1, dans lequel une distance en ligne droite entre les surfaces périphériques interne et externe résultant de la somme de la première bobine et de la seconde bobine est supérieure au diamètre d'une bobine de réception de puissance électrique recevant la puissance électrique sans fil.

3. Appareil de transmission de puissance électrique sans fil selon la revendication 1 ou la revendication 2, dans lequel l'unité de transmission de puissance électrique (510) comprend :
un pilote d'attaque (513), agencé pour générer un signal d'attaque pour la transmission de puissance électrique sous la commande de l'unité de commande de transmission de puissance électrique (511) ; et
un convertisseur auto-oscillant série (515), agencé pour commuter la puissance électrique en courant continue selon le signal d'attaque généré par le pilote d'attaque (513) pour fournir la puissance électrique commutée à l'unité de commutation.

4. Appareil de transmission de puissance électrique sans fil selon la revendication 3, dans lequel l'unité de transmission de puissance électrique (510) comprend en outre :
une unité de transmission de signaux (517), agencée pour générer un signal de demande demandant des informations sur un appareil de réception de puissance électrique sous la commande de l'unité de commande de transmission de puissance électrique (511) et pour transmettre le signal de demande généré à l'appareil de réception de puissance électrique par l'intermédiaire de la bobine de transmission de puissance électrique ; et
une unité de réception de signaux (519), agencée pour recevoir un signal en provenance de l'appareil de réception de puissance électrique à travers la bobine de transmission de puissance électrique et pour fournir les signaux reçus à l'unité de commande de transmission de puissance électrique (511).
